# EUROPEAN PATENT SPECIFICATION

(11) **EP 0 855 005 B1**
(45) Date of publication and mention of the grant of the patent: **10.01.2001**
(21) Application number: 96932879.8
(22) Date of filing: 08.10.1996
(51) Int. Cl.: F23G 5/46, F23G 5/027, F22B 31/04

(54) **INSTALLATION FOR PROCESSING WASTE**
ANLAGE ZUM BEHANDELN VON MÜLL
INSTALLATION DE TRAITMENT DES DECHETS

(30) Priority: 13.10.1995 EP 95202756
(43) Date of publication of application: 29.07.1998
(73) Proprietor: N.V. Kema, 6812 AR Arnhem (NL)
(72) Inventor: JANSSEN, Fransiscus, Johannes, Josephus, Gerardus, NL-6814 KV Arnhem (NL); KONINGS, Antonius, Jocabus, Adrianus, NL-6862 GV Oosterbeek (NL)
(74) Representative: Eveleens Maarse, Pieter
(86) International application number: NL9600393
(87) International publication number: WO9714001

(56) References cited:
- WO-A-81/01713
- FR-A- 2 649 186
- GB-A- 2 092 283
- GB-A- 2 119 279
- US-A- 2 090 328
- US-A- 2 239 341
- US-A- 3 965 362
- US-A- 4 424 765

## Description

The present invention relates to an installation for generating power, comprising: a main combustion chamber, being provided with means for generating steam; at least one secondary combustion chamber for burning carbonaceous materials, like wood, etcetera; a guiding duct for guiding the flue gases of said at least one secondary combustion chamber to the main combustion chamber.

Such an installation is known from WO-A-81/01713.

This prior art installation is fit for processing waste materials only. In this respect it is noted that, keeping the low energy content of waste in mind, the electrical power generated by such an installation is limited.

Of course it is possible to scale up the installations, but this leads to problems with the supply of waste materials and to large and voluminuous installations, which are difficult to operate economically.

The aim of the invention is to provide an installation and a method which is adapted for generating a substantial amount of electrical power and whereof the capital costs are limited.

Therefore the present invention provides such an installation wherein the main combustion chamber is fit for burning fossil fuels.

This offers the possibility to use conventional power stations, to which an additional installation may be added for the burning of waste materials.

Also the waste materials are burned to a high extent leading to less ashes, whereas the installation already present for burning off fossil fuels provides in highly efficient use of the heat provided by the burning of the waste materials. Put it otherwise, the waste materials are burned, saving an amount of fossil fuels in keeping the power of the power station equally.

In this respect it is noted that trials have been made to burn waste materials in the main combustion chamber of a power station. Bearing in mind that those combustion chambers are arranged for firing of substantially powder sized particles, the waste materials have to be pre-processed by cutting or sawing them to the required size. This involves substantial problems, so that this is not a very attractive option.

US-A-4 424 765 discloses an installation for generating power, comprising:
- a main combustion chamber, being fit for burning fossil fuels, being provided with means for generating steam;
- at least one supplementary combustion chamber for burning carbonaceous materials, like wood, etcetera;
- a guiding duct for guiding the flue gases of said at least one secondary combustion chamber to the main combustion chamber.

This prior art apparatus discloses a secondary combustion chamber in the form of a fluid bed.

This apparatus has a limited combustion efficiency, so that a substantial part of the combustible fuel is not effectively used.

The aim of the invention is to provide such an installation, whereof the efficiency is substantially improved.

This aim is reached in:
- that the secondary combustion chamber (3) comprises a TORBED reactor which consists of :
   * an annular series of blades (8) ;
   * means (6) for generating an air flow through said series of blades (8) ;
   * a burner (9) located under the annular series of blades (8) ;
   * a cone-shaped element located in the centre of the series of blades; and
   * means (2,4) for supplying the carbonaceous material to the annular series of blades (8) via the cone-shaped element,
- that the guiding duct (15) debouches in the secondary combustion chamber (3) above the annular set of blades (8); and
- that the in the guiding duct (15,17) particle removal means have been provided, which are arranged to remove particles with sizes down to a size which does not disturb the processes in the main combustion chamber (16), and
- that the secondary combustion chamber (3) is proviced with a preheating spiral (23) surrounding the secondary combustion chamber (3) for preheating the water to be used by the steam generating means.

The TORBED® reactor is a device which holds particles more or less in fluidisation, whilst the particles make a toroidal motion. For a more thorough description of the TORBED® reactor reference is made to EP-B-0 068 853, EP-A-0 293 103, EP-A-0 288 141 and EP-A-0 286 273.

According to the invention the pre-burning of the waste material may take place in a normal oxygen environment, for example when air is used as combustion air. This will result in flue gas that mainly comprises N₂, O₂, CO₂ and H₂O. This type of flue gas may be used in a conventional boiler and by doing this, the amount of conventional fuel required may be reduced.

When pure oxygen is used for burning the waste a flue gas comprising only O₂, CO₂ and H₂O is formed. Thus no nitrogen is present. If this type of flue gas is passed to a boiler then heat is absorbed and oxygen is used for combustion.

In case the waste is burned in a low oxygen environment, for example if flue gas from the power station or the combustion chamber itself is used as combustion gas, the flue gas of the TORBED® will still comprise amounts of CO₂ and H₂O but mostly CO, N₂ and H₂. The thus obtained flue gas has reducing properties and may be used for various purposes. If fed to the boiler it will burn out and thereby reduce the amount of conventional fuel used.

Because of its reducing properties it may be used as a re-burning agent for reducing NOₓ. This process also takes place in the boiler.

As an alternative the thus obtained flue gas may be sold as a reducing agent or for the production of H₂. For the latter purpose a refinery should preferably be present in the vicinity of the power station because transport costs would make the process otherwise too expensive.

According to the invention the waste material and fuels are thus processed by burning it. The resulting products ashes, heat and flue gas may be either re-used, sold or stored. Ashes take in a much smaller amount of space than the initial wastes. Storage thereof is therefore substantially simplified and less costly.

The process of the invention is so-called "CO₂ neutral". Carbonaceous waste material that is dumped will automatically produces carbon dioxide (CO₂) and methane (CH₄) eventually. Fossil fuels like coal are under the surface of the earth inert till exploitation and will not produce CO₂ by themselves, like wastes do. If the waste material is used according to the invention, still CO₂ is produced, even quicker than when dumped. However, the process of the invention will indirectly result in a replacement of part of the fossil fuel conventionally needed. The fuel that is saved by this will not produce CO₂. In this situation one may speak of a "CO₂ neutral" process.

The ashes resulting from a conventional boiler fed with fossil fuel, like coal, are of a well-defined composition. Therefore, they may be used as such in construction works, like road building and the like. If these ashes would cqntain contaminants resulting from material that is co-combusted with the conventional fuel, this would no longer be possible. Not only would the ashes be mistrusted by the user, but the risk of leaching of pollutants into the environment would be high.

The invention is suited for a multitude of waste types. Preferably, carbonaceous wastes are used, such as wood, timber, chemical waste, municipal waste, vegetable, fruit and garden waste and the like. Even polymeric materials, like PVC, may be burned. Furthermore, the invention may be used for fuel types that are difficult to process in a conventional boiler like cokes etcetera.

The method of the invention may result in a more flexible management of the power station. In case the boiler is not used to the full 100 % the pre-combustion chamber may be switched off. As an alternative the combustion chamber may still be in operation, but the flue gas may either be stored or carried away to be sold or for the production of pure H₂. If stored it may be used again during peak hours.

If waste material such as clean wood is used for co-combustion in the boiler, it must be reduced in size prior to introduction in the boiler. However, according to the invention the waste material need not necessarily be reduced before being burned in the TORBED®. This is a very important advantage of the method of the invention since the pre-processing costs thereof are therefore lower.

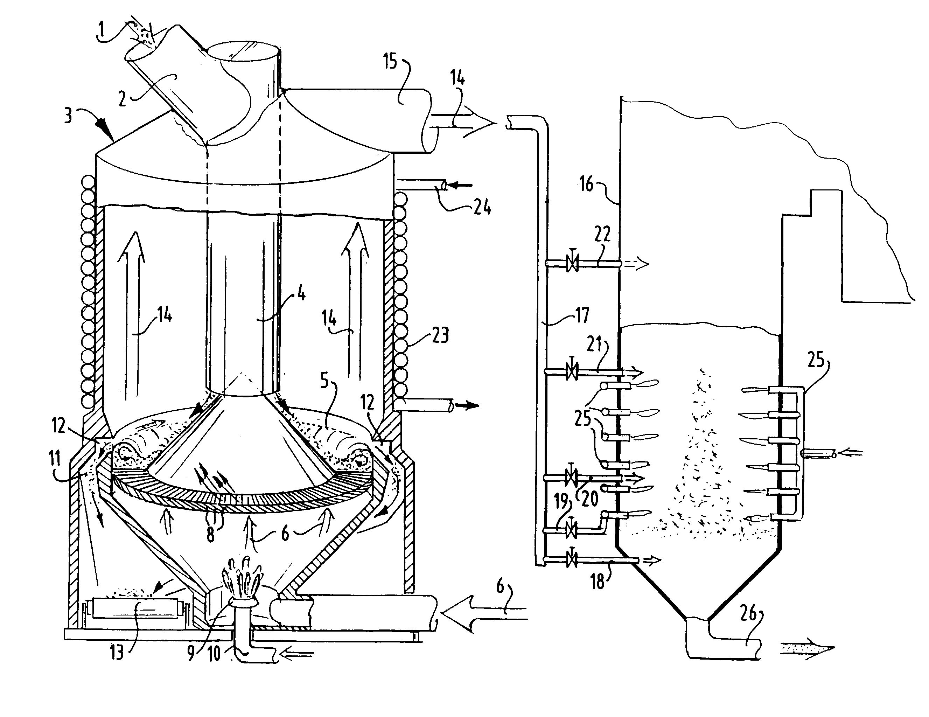

The principles of the present invention may find application in various practical embodiments that fall within the scope of the claims. The invention will be illustrated with reference to the embodiment, schematically shown in the Figure.

In this embodiment waste material 1 is fed via a conduit 2 to a TORBED® 3. The TORBED® 3 comprises means 4 for supplying the waste to the toroidal bed 5. The bed 5 is produced by means of an air flow 6 that is supplied through a supply pipe 7. The air flow is channeled through a series of blades 8 thus causing the toroidal motion of the bed 5. The TORBED® also comprises a burner 9 fed by means of a fuel pipe 10. The ashes 11 are discarded through an opening 12 along the periphery of the bed and collected in a container 13. As an alternative the ashes may be fed to the boiler together with flue gas.

The flue gas produced (symbolized by arrows 14) is discharged through a pipe 15 in the top of the TORBED® 3. The flue gas 14 is transported to the boiler 16 via a conduit 17 or optionally via a cyclone. Depending on the type of gas used for the pre-burning process the flue gas is discharged through one or more of the outlets 18, 19, 20, 21 and 22.

The use of a surplus of air will result in flue gas type A, comprising N₂, CO₂, H₂O, O₂, dust and other compounds. Use of a low amount of oxygen results in flue gas type B, having reducing properties and comprising CO, H₂, H₂O, O₂, CO₂ and dust.

Outlet 18 may be used for flue gas types A and B. Type A may also be injected via outlet 19 or together with the powder coal 25 introduced via inlet 20. Gases of type B may be introduced together with so-called secondary air at outlet 20. Outlet 21 may be used for discharging flue gas type A together with so-called tertiary air. Reburn fuel (type B) may be introduced via outlet 22.

The boiler further comprises a series of burners 25, and an outlet for slag or bottom ash 26.

The heat produced in the boiler may for example be used for the generation of steam for driving a turbine (not shown). The water from which the steam is produced may already be pre-heated by the heat generated in the TORBED® 3. For this purpose the TORBED® is provided with a spiral pipe 23. Water 24 is transported through the spiral, pre-heated there and transported to a steam generating device (not shown).

## Claims

1. Installation for generating power, comprising:
- a main combustion chamber (16), being fit for burning fossil fuels, being provided with means for generating steam;
- at least one secondary combustion chamber (3) for burning carbonaceous materials, like wood, etcetera;
- a guiding duct (15,17) for guiding the flue gases of said at least one secondary combustion chamber (3) to the main combustion chamber (16), **characterized** in:
- that the secondary combustion chamber (3) is a TORBED reactor which comprises:
* an annular series of blades (8) ;
* means (6) for generating an air flow through said series of blades (8);
* a burner (9) located under the annular series of blades (8);
* a cone-shaped element located in the centre of the series of blades; and
* means (2,4) for supplying the carbonaceous material to the annular series of blades (8) via the cone-shaped element,
- that the guiding duct (15) debouches in the secondary combustion chamber (3) above the annular set of blades (8); and
- that the in the guiding duct (15,17) particle removal means have been provided, which are arranged to remove particles with sizes down to a size which does not disturb the processes in the main combustion chamber (16), and
- that the secondary combustion chamber (3) is provided with a preheating spiral (23) surrounding the secondary combustion chamber (3) for preheating the water to be used by the steam generating means.

2. Installation for generating power according to claim 1, **characterized** in that the installation forms part of a power station.

3. Installation according to claim 1 or 2, **characterized** in that the particle removal means include at least one cyclone.

4. Installation according to claim 1, 2 or 3, **characterized** in that the particle removal means include at least an electrostatic filter.

5. Installation according to one of the preceding claims, **characterized** in that the main combustion chamber (16) is fit for burning pulverized coal.

6. Installation according to one of the preceding claims, **characterized** in that in the duct for the flue gases of main combustion chamber air preheaters are incorporated for heating the combustion air for the main and secondairy combustion chambers.

7. Installation according to one of the preceding claims, wherein the main combustion chamber (16) extends substantially vertical, and injection means (21) are provided for injecting the flue gases of the secondary combustion chamber (3) into the main combustion chamber (16), **characterized** in that the injection means (21) are substantially located in that part of the main combustion chamber (16) wherein the combustion takes place.

8. Installation according to one of the claims 1-6, wherein the main combustion chamber (16) extends substantially vertical, and injection means (21) are provided for injecting the flue gases of the secondary combustion chamber (3) into the main combustion chamber (16), **characterized** in that the injection means (21) are substantially located in the upper part of the main combustion chamber (16).

## Patentansprüche

1. Anlage zum Erzeugen von Leistung, mit:
- einer Hauptverbrennungskammer (16), die geeignet ist zum Verbrennen von fossilen Brennstoffen, die mit einem Mittel zum Erzeugen von Dampf versehen ist;
- mindestens einer Sekundärverbrennungskammer (3) zum Verbrennen kohlenstoffhaltiger Materialien wie Holz usw.;
- einer Führungsrohrleitung (15, 17) zum Führen der Verbrennungsgase der mindestens einen Sekundärverbrennungskammer (3) zu der Hauptverbrennungskammer (16);
dadurch gekennzeichnet,
- daß die Sekundärverbrennungskammer (3) ein TORBED-Reaktor ist, der aufweist:
* eine ringförmige Reihe von Klingen (8);
* ein Mittel (6) zum Erzeugen eines Luftstrones durch die Reihe von Klingen (8);
* einen unter der ringförmigen Reihe von Klingen (8) angeordneten Brenner (9);
* ein in der Mitte der Reihe von Klingen angeordnetes kegelförmiges Element; und
* ein Mittel (2, 4) zum Liefern des kohlenstoffhaltigen Materials zu der ringförmigen Reihe von Klingen (8) über das kegelförmige Element;
- daß die Führungsrohrleitung (15) in die Sekundärverbrennungskammer (3) oberhalb des ringförmigen Satzes von Klingen (8) einmündet; und
- daß Teilchenentfernungsmittel in der Führungsrohrleitung (15, 17) vorgesehen worden sind, die zum Entfernen von Teilchen mit Größen bis zu einer Größe herab, die die Prozesse in der Hauptverbrennungskammer (16) nicht stören, eingerichtet ist; und
- daß die Sekundärverbrennungskammer (3) mit einer die Sekundärverbrennungskammer (3) umgebenden Vorheizspirale (23) zum Vorheizen des von dem Dampferzeugungsmittel zu benutzenden Wassers versehen ist.

2. Anlage zum Erzeugen von Leistung nach Anspruch 1, dadurch gekennzeichnet, daß die Anlage Teile eines Kraftwerkes bildet.

3. Anlage nach Anspruch 1 oder 2, dadurch gekennzeichnet, daß die Teilchenentfernungsmittel mindestens ein Zyklon enthalten.

4. Anlage nach Anspruch 1, 2 oder 3, dadurch gekennzeichnet, daß die Teilchenentfernungsmittel mindestens einen elektrostatischen Filter enthalten.

5. Anlage nach einem der vorhergehenden Ansprüche, dadurch gekennzeichnet, daß die Hauptverbrennungskammer (16) geeignet ist zum Brennen pulverisierter Kohle.

6. Anlage nach einem der vorhergehenden Ansprüche, dadurch gekennzeichnet, daß in der Rohrleitung für die Verbrennungsgase der Hauptverbrennungskammer Luftvorheizer eingebaut sind zum Erwärmen der Verbrennungsluft für die Haupt- und Sekundärverbrennungskammer.

7. Anlage nach einem der vorhergehenden Ansprüche, bei der sich die Hauptverbrennungskammer (16) im wesentlichen vertikal erstreckt und Injektionsmittel (21) zum Injizieren der Verbrennungsgase der Sekundärverbrennungskammer (3) in die Hauptverbrennungskammer (16) vorgesehen sind, dadurch gekennzeichnet, daß die Injizierungsmittel (21) im wesentlichen in dem Teil der Hauptverbrennungskammer (16) angeordnet sind, in dem die Verbrennung stattfindet.

8. Anlage nach einem der Ansprüche 1 bis 6, bei der sich die Hauptverbrennungskammer (16) im wesentlichen vertikal erstreckt und Injizierungsmittel (21) zum Injizieren der Verbrennungsgase der Sekundärverbrennungskammer (3) in die Hauptverbrennungskammer (16) vorgesehen sind, dadurch gekennzeichnet, daß die Injizierungsmittel (21) im wesentlichen in dem oberen Teil der Hauptverbrennungskammer (16) angeordnet sind.

## Revendications

1. Installation de production d'énergie, comprenant :
- une chambre de combustion principale (16) conçue pour brûler des combustibles fossiles et pourvue de moyens servant à produire de la vapeur ;
- au moins une chambre de combustion secondaire (3) destinée à brûler des matériaux charbonneux, tels que le bois, etc. ;
- une conduite de guidage (15, 17) destinée à guider les gaz de combustion de ladite au moins une chambre de combustion secondaire (3) jusqu'à la chambre de combustion principale (16), caractérisée en ce que
- la chambre de combustion secondaire (3) est un réacteur TORBED, qui comprend :
* une série annulaire de lames (8) ;
* des moyens (6) servant à produire un courant d'air à travers ladite série de lames (8) ;
* un brûleur (9) situé sous la série annulaire de lames (8) ;
* un élément en forme de cône situé au centre de la série de lames ; et
* des moyens (2, 4) servant à envoyer le matériau charbonneux vers la série annulaire de lames (8) via l'élément en forme de cône ;
- la conduite de guidage (15) débouche dans la chambre de combustion secondaire (3), au-dessus du jeu annulaire de lames (8) ; et
- dans la conduite de guidage (15, 17) ont été prévus des moyens d'élimination de particules, aménagés de façon à éliminer les particules dont la granulométrie est inférieure à une granulométrie ne perturbant pas les processus dans la chambre de combustion principale (16), et
- la chambre de combustion secondaire (3) est entourée d'une spirale de préchauffage (23) pour préchauffer l'eau destinée à être utilisée par les moyens de production de vapeur.

2. Installation de production d'énergie selon la revendication 1, caractérisée en ce qu'elle forme une partie d'une centrale énergétique.

3. Installation selon la revendication 1 ou 2, caractérisée en ce que les moyens d'élimination de particules comprennent au moins un cyclone.

4. Installation selon la revendication 1, 2 ou 3, caractérisée en ce que les moyens d'élimination de particules comprennent au moins un filtre électrostatique.

5. Installation selon l'une quelconque des revendications précédentes, caractérisée en ce que la chambre de combustion principale (16) est conçue pour brûler du charbon pulvérisé.

6. Installation selon l'une quelconque des revendications précédentes, caractérisée en ce que des dispositifs de préchauffage d'air sont incorporés dans la conduite destinée aux gaz de combustion de la chambre de combustion principale pour chauffer l'air de combustion destiné à la chambre de combustion principale et à la chambre de combustion secondaire.

7. Installation selon l'une quelconque des revendications précédentes, dans laquelle la chambre de combustion principale (16) s'étend dans une direction essentiellement verticale, et des moyens d'injection (21) sont prévus pour injecter les gaz de combustion de la chambre de combustion secondaire (3) dans la chambre de combustion principale (16), caractérisée en ce que les moyens d'injection (21) sont essentiellement situés dans la partie de la chambre de combustion principale (16) dans laquelle se produit la combustion.

8. Installation selon l'une quelconque des revendications 1 à 6, dans laquelle la chambre de combustion principale (16) s'étend dans une direction essentiellement verticale, et des moyens d'injection (21) sont prévus pour injecter les gaz de combustion de la chambre de combustion secondaire (3) dans la chambre de combustion principale (16), caractérisée en ce que les moyens d'injection (21) sont essentiellement situés dans la partie supérieure de la chambre de combustion principale (16).
